# EUROPEAN PATENT SPECIFICATION

(11) **EP 0 617 854 B1**
(45) Date of publication and mention of the grant of the patent: **25.09.1996**
(21) Application number: 92924944.9
(22) Date of filing: 14.12.1992
(51) Int. Cl.: H02G 3/22

(54) **SEALED CABLE PENETRATIONS AND A METHOD FOR PULLING CABLE THROUGH SUCH CABLE PENETRATIONS**
ABGEDICHTETE KABELDURCHFÜHRUNG UND VERFAHREN ZUM ZIEHEN EINES KABELS DURCH DIESE KABELDURCHFÜHRUNG
DISPOSITIFS D'INSERTION DE CABLE ETANCHES ET PROCEDE SERVANT A TIRER LE CABLE A TRAVERS DE TELS DISPOSITIFS D'INSERTION

(30) Priority: 17.12.1991 NO 914975
(43) Date of publication of application: 05.10.1994
(73) Proprietor: A/S ROCKWOOL, N-0401 Oslo 4 (NO)
(72) Inventor: GILBERG, Ernst, N-0485 Oslo (NO); EILERTSEN, Yngve, N-0765 Oslo (NO)
(74) Representative: Kraus, Jürgen Helmut, Dipl.-Phys. Dr.
(86) International application number: NO9200201
(87) International publication number: WO9312565

(56) References cited:
- US-A- 4 419 535

## Description

### Technical field

The present invention relates to sealed cable penetrations and a method for pulling electrical cables through such sealed cable penetrations.

### Background Art

Sealed cable penetrations, such as for example cable penetrations in fire resistant walls and bulk-heads are often complicated and have an unpractical design. Further most known sealed cable penetrations are costly and difficult to install. Due to the lack of good, simple and low cost cable penetration systems, it is often, when new cables are pulled through existing cable penetrations, not made a sufficient sealing about the new cable. The cable penetration thus no longer satisfy the requirement which are set to the fire resistency of such penetrations. As far as it is known, it does not exist a certified cable penetration system which has been tested both before and after cables have been pulled through the penetration.

US-A-4,419,535 discloses a sealed cable penetration comprising an outer layer of a heat resistant material which surrounds an inner layer and which expands upon heating, the inner layer being pressed around a cable and a sealant being poured thereon to provide a cold smoke seal.

The object underlying the invention is to provide a sealed cable penetration having a simple structure and being simple to produce and nevertheless provides a bar for cold smoke.

According to the invention, the above object is achieved by a sealed cable penetration comprising an inner layer made of a heat resistant, flexible and compressible material and an outer layer of a heat resistant material which surrounds said inner layer and which expands upon heating, characterized in that said inner layer serves as a cold smoke seal, whether or not a cable is installed being surrounded by said inner layer.

Further, according to the invention, a method for installing at least one new cable in the above sealed cable penetration is provided, wherein said inner layer is removed, while said outer layer is maintained, whereafter said new cable is pulled and the annulus between the new cable and said outer layer is filled with a heat resistant, flexible and compressible material for forming a new inner layer.

By this method, new cables can be pulled without reducing the fire resistance of already installed cable penetrations and in a very simple way.

As an outer layer it is preferably used an intumescent, vermiculite-based material. It is especially preferred to use vermiculite-based sheet material, for example a material as described in US patent 3,916,057.

When the cable penetration according to the present invention is exposed to high temperature, the outer layer will expand and thus compress the inner layer of flexible, heat resistant material about the cable. Thus the cable penetration according to the present invention is able to meet the requirements which are set to fire resistance of cable penetrations.

As an inner layer it is preferably used materials such as mineral wool, ceramic fibre material or the like. The cable penetration according to the present invention function through a cooperation between the heat expanding material in the outer layer and the flexible heat resistant material in the inner layer. This combination ensures that cold smoke is stopped by the flexible, heat resistant material, and that extension of fire through the penetration is prevented due to expansion of the heat expanding material on direct influence of fire.

For cables having big dimensions and for cable penetrations where especially strict requirements and set to fire resistance, it is preferably arranged a layer of fire resistant material about the cable on each side of the penetration.

The cable penetration according to the present invention is simple to produce and gives a very good security against penetration of fire. By use of present invention it is further simple and economic favorable to make ready openings for cable penetrations for pulling of new cables later on.

The cable penetration according to the present invention is very flexible in use as standarized cable penetrations can be used for cables of different diameters while maintaining the fire resistance. The only limitation as to the diameter of the cables is that the diameter of the cables must be less than the diameter of the inner layer.

The present invention will now be further described under reference to the accompanying drawings.

### Brief Description of Drawings

Figure 1 shows a section through a wall having installed a sealed cable penetration according to the present invention, made ready for pulling of a cable,
Figure 2 shows the same cable penetration as in Figure 1 with a cable installed,
Figure 3 shows a section through a second embodiment of the sealed cable penetration with a cable installed according to the present invention.

### Detailed Description of Preferred Embodiments

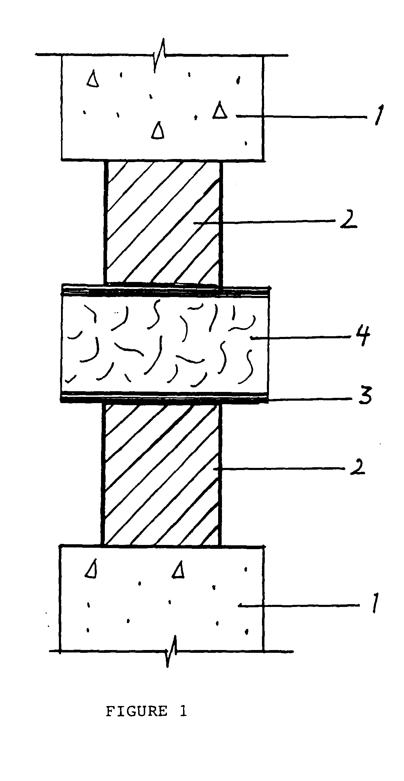

In figure 1 it is shown a cut through part of a wall 1 having installed a cable penetration according to the present invention. An opening in the wall 1 is sealed by means of a fire resistant mortar 2. In an opening in the mortar 2 it is arranged a cable penetration according to the present invention. The cable penetration comprises an outer layer 3 made from a heat resistant material which expands when exposed to high temperatures. Inside the outer layer 3 there is arranged an inner layer 4 made from a flexible, compressible, heat resistant material. As a flexible material it is preferably used a loose mineral wool such as Rockwool insulation wool delivered by Elkem-Rockwool, Norway. Alternatively, a flexible compressible ceramic fibre material can be used. The cable penetration shown in Figure 1 is ready for installing of a cable.

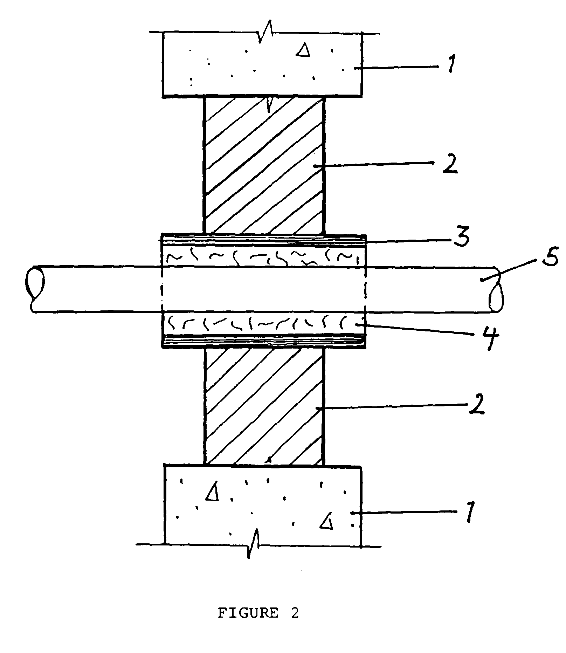

In figure 2 the cable penetration of figure 1 is shown with a cable 5 installed. In order to install the cable 5 the inner layer 4 of flexible heat resistant material is removed, whereafter the cable 5 is pulled in place through the opening left when the inner layer 4 is removed. Thereafter the annulus between the cable 5 and the outer layer 3 is sealed by means of the flexible, heat resistant material 4.

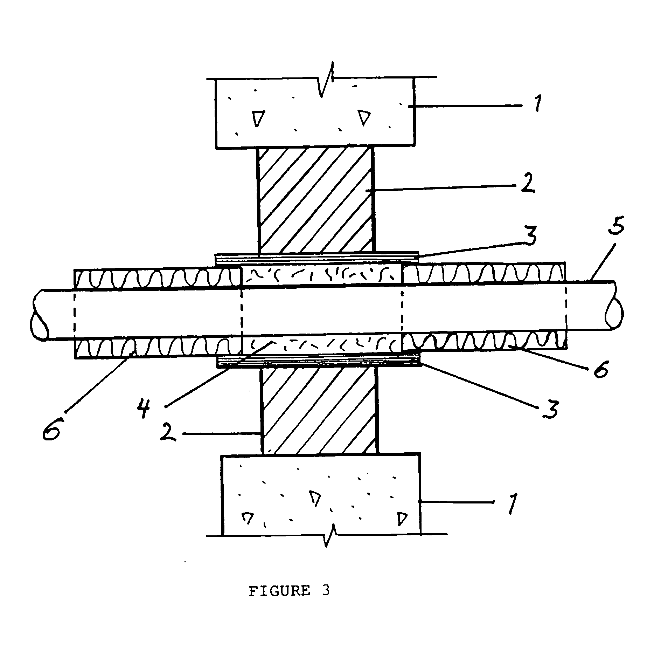

For cables having a big diameter it is often required that the cable is insulated on both sides of the cable penetration. For cable penetrations according to the present invention this can be done as shown in figure 3, where an insulation layer 6 is arranged about the cable 3 on both sides of the penetration. The layer 6 is preferably made from mineral wool or a similar heat resistant material.

The cable penetrations shown on the figures comprises one cable. However, it is within the scope of the present invention to arrange more than one cable in the cable penetration. Further, it is within the scope of the present invention to provide more than one cable penetration in an opening for cable penetrations in a wall.

## Claims

1. A sealed cable penetration comprising an inner layer (4) made of a heat resistant, flexible and compressible material and an outer layer (3) of a heat resistant material which surrounds said inner layer (4) and which expands upon heating, **characterized in** that said inner layer (4) serves as a cold smoke seal, whether or not a cable (5) is installed being surrounded by said inner layer (4).

2. A sealed cable penetration according to claim 1, **characterized in** that the outer layer (3) is made from an intumescent, vermiculite-based material.

3. A sealed cable penetration according to claim 1 or 2, **characterized in** that the inner layer (4) is made from mineral wool.

4. A sealed cable penetration according to claim 1 or 2, **characterized in** that the inner layer (4) is made from a ceramic fibre material.

5. A sealed cable penetration according to any preceding claim, **characterized in** that a layer (6) of fire resistant material is arranged about the cable on each side of the penetration.

6. A method for installing at least one new cable (5) in a sealed cable penetration according to any preceding claim, wherein said inner layer (4) is removed, while said outer layer (3) is maintained, whereafter said new cable (5) is pulled and the annulus between the new cable (5) and said outer layer (3) is filled with a heat resistant, flexible and compressible material for forming a new inner layer (4).

## Patentansprüche

1. Versiegelte Kabeldurchführung, umfassend eine innere Schicht (4), die aus einem wärmebeständigen, flexiblen und kompressiblen Material hergestellt ist, und eine äußere Schicht (3) aus einem wärmebeständigen Material, die die innere Schicht (4) umgibt und die sich bei Erwärmung ausdehnt, dadurch gekennzeichnet, daß die innere Schicht (4) als eine Kaltrauchdichtung dient, unabhängig davon, ob ein von der inneren Schicht (4) umgebenes Kabel (5) eingebaut ist oder nicht.

2. Versiegelte Kabeldurchführung nach Anspruch 1, dadurch gekennzeichnet, daß die äußere Schicht (3) aus einem anschwellenden Material auf Vermikulitbasis hergestellt ist.

3. Versiegelte Kabeldurchführung nach Anspruch 1, dadurch gekennzeichnet, daß die innere Schicht (4) aus Mineralwolle hergestellt ist.

4. Versiegelte Kabeldurchführung nach Anspruch 1 oder 2, dadurch gekennzeichnet, daß die innere Schicht (4) aus einem Keramikfasermaterial hergestellt ist.

5. Versiegelte Kabeldurchführung nach einem der vorstehenden Ansprüche, dadurch gekennzeichnet, daß eine Schicht (6) aus feuerbeständigem Material um das Kabel auf jeder Seite der Durchführung angeordnet ist.

6. Verfahren zum Einbau von wenigstens einem neuen Kabel (5) in eine versiegelte Kabeldurchführung nach einem der vorstehenden Ansprüche, bei welchem die innere Schicht (4) entfernt wird, während die äußere Schicht (3) erhalten wird, woraufhin das neue Kabel (5) eingezogen wird und der Ring zwischen dem neuen Kabel (5) und der äußeren Schicht (3) mit einem wärmebeständigen, flexiblen und kompressiblen Material zur Bildung einer neuen inneren Schicht (4) gefüllt wird.

## Revendications

1. Dispositif d'insertion de câble étanche comprenant une couche interne (4) faite d'un matériau thermo-résistant, flexible et compressible et une couche externe (3) en un matériau thermo-résistant qui entoure ladite couche interne (4) et qui se dilate lors d'un chauffage, caractérisé en ce que ladite couche interne (4) sert de joint froid de fumée, qu'un câble (5) soit ou non installé qui est entouré par ladite couche interne (4).

2. Dispositif d'insertion de câble étanche selon la revendication 1, caractérisé en ce que la couche externe (3) est faite d'un matériau intumescent à base de vermiculite.

3. Dispositif d'insertion de câble étanche selon la revendication 1 ou 2, caractérisé en ce que la couche interne (4) est faite de laine minérale.

4. Dispositif d'insertion de câble étanche selon la revendication 1 ou 2, caractérisé en ce que la couche interne (4) est faite d'un matière en fibre céramique.

5. Dispositif d'insertion de câble étanche selon toute revendication précédente, caractérisé en ce qu'une couche (6) en un matériau ignifuge est agencée autour du câble de chaque côté du dispositif d'insertion.

6. Méthode d'installation d'au moins un nouveau câble (5) dans un dispositif d'insertion de câble étanche selon toute revendication précédente où ladite couche interne (4) est retirée, alors que ladite couche externe (3) est maintenue, ensuite ledit nouveau câble (5) est tiré et l'anneau entre le nouveau câble (5) et ladite couche externe (3) est rempli d'un matériau thermo-résistant, flexible et compressible pour former une nouvelle couche interne.
